# FASCICULE DE BREVET EUROPEEN

(11) **EP 1 744 183 B1**
(45) Date de publication et mention de la délivrance du brevet: **17.02.2010**
(21) Numéro de dépôt: 06116400.0
(22) Date de dépôt: 30.06.2006
(51) Int. Cl.: G01V 13/00

(54) **Dispositif de test pour portique détecteur de métaux**
Testvorrichtung für Durchgangsmetalldetektor
Test device for walk-through metal detector

(30) Priorité: 11.07.2005 FR 0507373
(43) Date de publication de la demande: 17.01.2007
(73) Titulaire: Manneschi, M. Alessandro, 52100 Arezzo (IT)
(72) Inventeur: Manneschi Alessandro, I-52100 Arezzo (IT)
(74) Mandataire: Texier, Christian

(56) Documents cités:
- EP-A- 1 394 570
- AU-B2- 562 089
- US-A- 5 672 807
- US-A- 5 994 897

## Description

La présente invention concerne le domaine des détecteurs de métaux.

La présente invention s'applique en particulier aux détecteurs de métaux destinés au contrôle d'accès à des milieux sensibles, tels que et sans limitation aucune, les aéroports, banques, ambassades, installations militaires, etc ...

On sait que la plupart des systèmes détecteurs de métaux proposés dans ce contexte comprennent des bobinages émetteurs, des bobinages récepteurs et un circuit de traitement électronique adapté pour déceler des variations de signaux reçus sur les bobinages récepteurs, par rapport à une valeur de référence.

Ces détecteurs ont généralement la forme globale d'un portique ou tunnel par lequel transitent les individus, voire les matériels à contrôler.

On trouvera des exemples de réalisation de détecteurs connus dans les documents FR-A-2720519, FR-A-2773350, FR-A-2516251, FR-A-2610417, FR-A-2607937, FR-A-2697919, FR-A-2698178 et FR-A-2698968, IT 1271382, IT 1216946, IT 1260208, IT 1249278, IT 1214991 et FN 913502.

Les détecteurs connus ont rendu de grands services.

Cependant, ils ne donnent pas toujours satisfaction.

Il s'avère notamment relativement difficile de contrôler le bon fonctionnement et/ou le réglage de ces détecteurs. En particulier, il est généralement délicat de vérifier que les détecteurs présentent une sensibilité adéquate, en raison de la diversité d'objets dangereux, à détecter, apparaissant de nos jours.

Pourtant au moins dans certains pays des normes imposent aujourd'hui une série de tests précis, qui doivent être pratiqués lors de l'installation du détecteur, voire à intervalles réguliers ou encore lors des opérations de maintenance.

En pratique, les responsables des installations sont souvent contraints de pratiquer des tests manuels de détection et de sensibilité en soumettant manuellement des prototypes divers d'objets susceptibles d'être détectés, par exemple des lames de couteaux de géométries et de dimensions diverses, aux détecteurs. Ces opérations sont fastidieuses et difficiles à exécuter manuellement d'une façon précise et répétitive. Elles requièrent le passage de nombreux prototypes, et ce sous de nombreuses orientations vis à vis des bobinages émetteurs et récepteurs.

On a décrit dans le document EP-A-1394570 un détecteur de métaux comprenant des bobinages récepteurs et un circuit de traitement électronique adapté pour déceler des variations des signaux reçus sur les bobinages récepteurs, par rapport à une valeur de référence, comprenant en outre un module de test qui comporte des moyens de sélection aptes à détecter une requête de test, et des moyens de contrôle, mis en oeuvre lors d'une détection de requête de test par les moyens de sélection, aptes à comparer les signaux issus des bobinages récepteurs, lors du passage subséquent d'un objet de référence standard connu, dans le détecteur, avec une réponse prédéterminée.

Cependant, les moyens décrits dans ce document EP-A-1394570 requièrent toujours une manipulation manuelle assez complexe de l'objet de référence standard connu.

Le document US-A-4672837 propose, pour tester un détecteur de métaux, de suspendre un câble ou un moyen équivalent à la traverse supérieure d'un portique de détecteur, d'accrocher un objet dont la masse, la taille et le matériau simulent une arme, à hauteur choisie sur le câble, de faire osciller l'objet ainsi suspendu et de détecter la réponse provoquée au niveau du détecteur. De tels moyens ne permettent cependant pas d'opérer des tests précis et complets.

Le document US-A-5 672 807 décrit un dispositif de test pour portique détecteur de métaux comprenant un châssis démontable composé de la combinaison d'une embase adaptée pour être fixée sur les panneaux latéraux du portique et une colonne montée à pivotement sur l'embase et associée à des moyens aptes à porter à déplacement un échantillon de référence.

La présente invention a pour but de proposer des moyens permettant d'améliorer la situation.

Ce but est atteint dans le cadre de la présente invention, grâce à un dispositif de test pour portique détecteur de métaux, selon la revendication 1 annexée.

Selon une autre caractéristique avantageuse de la présente invention, le châssis précité comporte au moins un connecteur électrique adapté pour permettre de relier ledit châssis, et plus précisément des capteurs portés par celui-ci, à un micro-ordinateur ou encore à une unité de calcul et de traitement intégrée à un portique détecteur de métaux. Cette liaison a une double finalité : d'une part fournir une séquence d'instructions de manipulation pour un opérateur, délivrée par le micro-ordinateur ou l'unité de calcul intégrée au portique et, d'autre part enregistrer et traiter des informations issues des capteurs portés par le châssis.

D'autres caractéristiques, buts et avantages de la présente invention apparaîtront à la lecture de la description détaillée qui va suivre, et en regard des dessins annexés, donnés à titre d'exemple non limitatif et sur lesquels :
- la figure 1 représente une vue schématique en perspective d'un châssis démontable conforme à la présente invention,
- la figure 2 représente une vue partielle à échelle agrandie d'un sous ensemble du même châssis montrant les moyens de verrouillage, à hauteur choisie, d'un plateau sur des colonnes verticales,
- la figure 3 représente une vue schématique en perspective d'une embase,

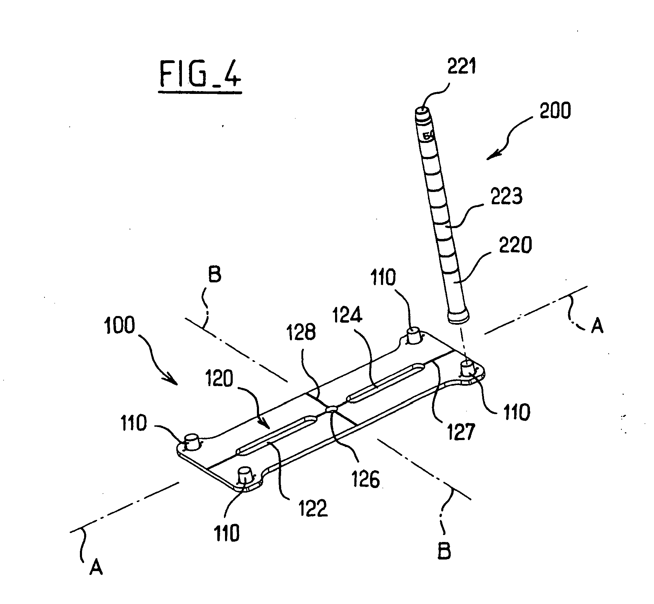

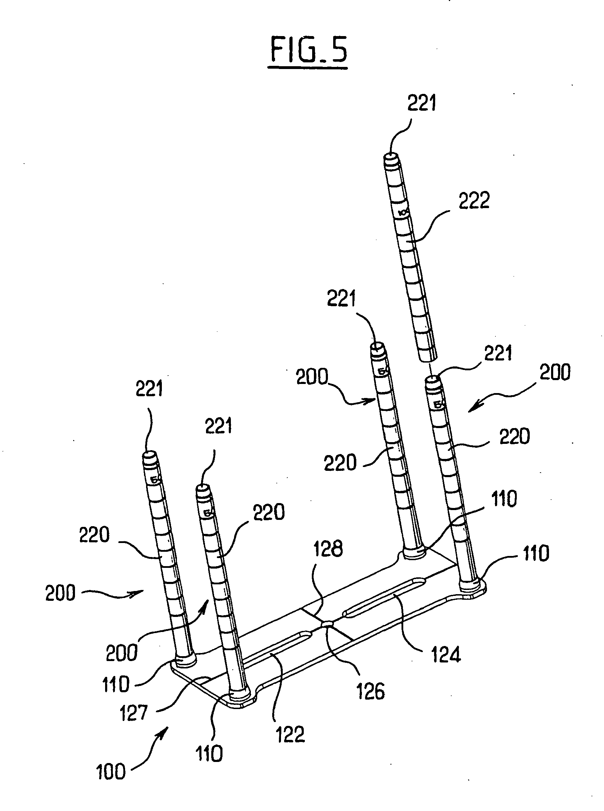

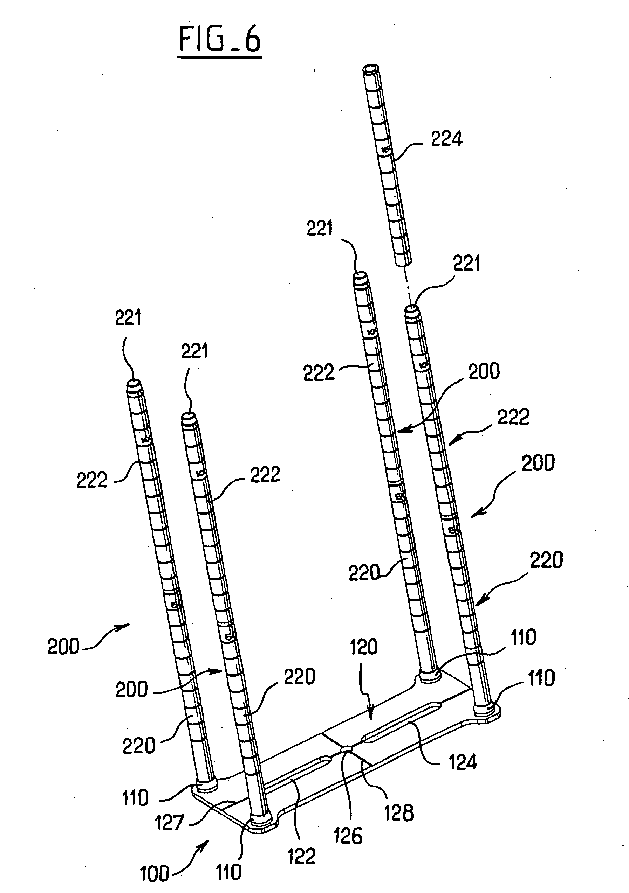

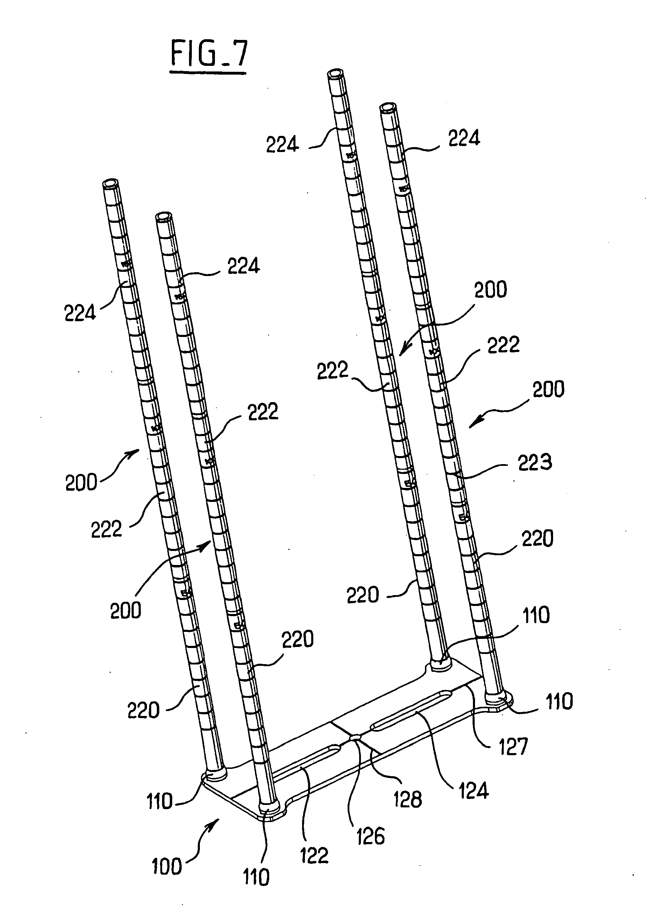

- les figures 4, 5, 6 et 7 montrent l'assemblage successif de différents tronçons de colonnes sur l'embase,

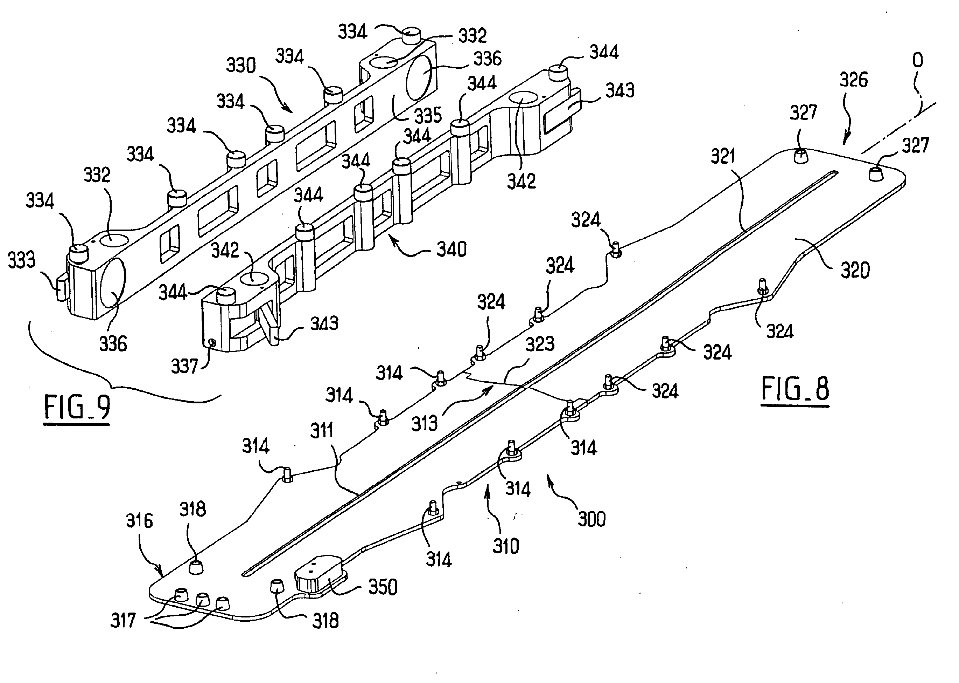

- la figure 8 représente une vue en perspective d'un plateau réalisé par l'assemblage de deux plaques complémentaires,
- la figure 9 représente une vue schématique en perspective de deux éléments latéraux ou ridelles du plateau,

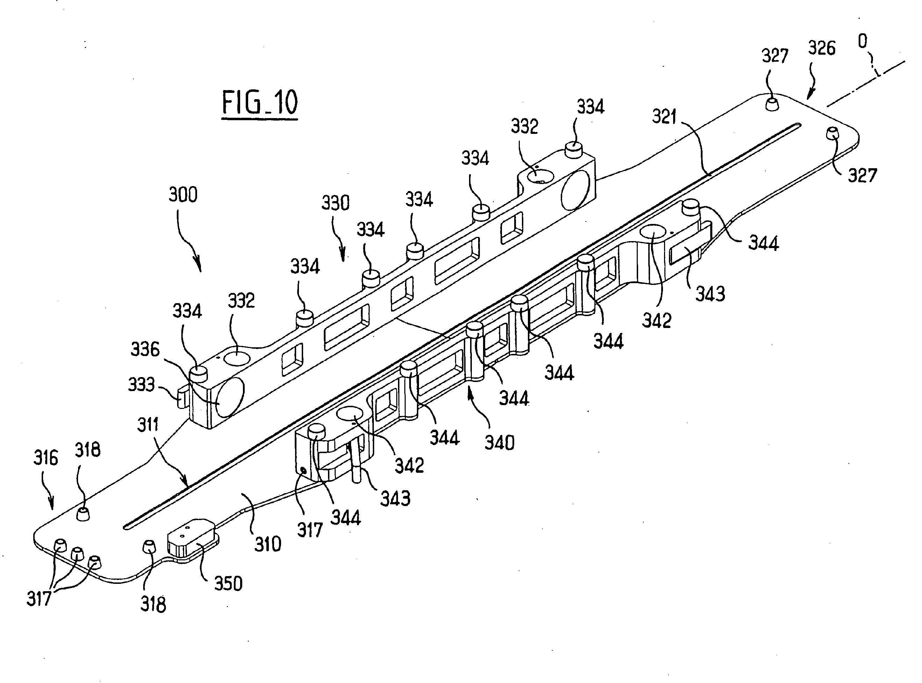

- la figure 10 représente une vue complète du plateau assemblé,
- la figure 11 représente une seconde vue du même plateau,
- la figure 12 représente une vue partielle à échelle agrandie d'un capteur et de connecteurs associés intégrés sur un élément latéral du plateau,

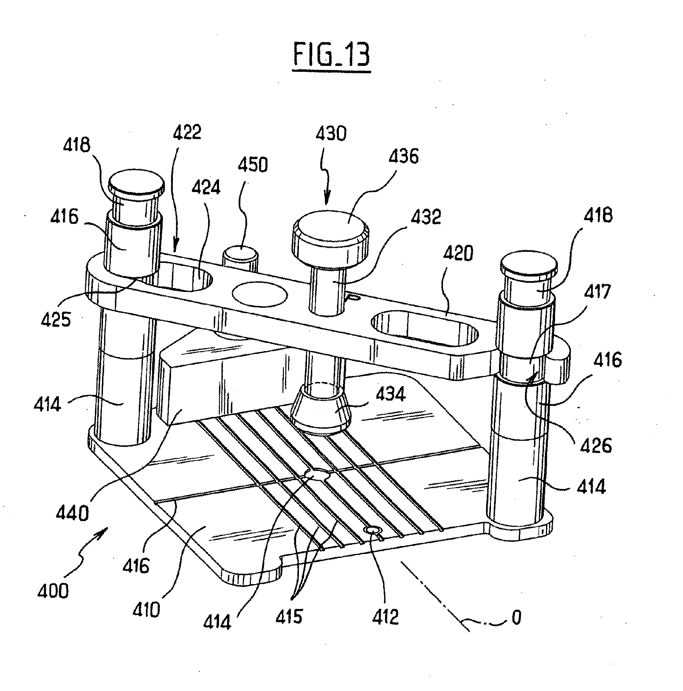

- la figure 13 représente une vue en perspective d'une platine conforme à la présente invention,

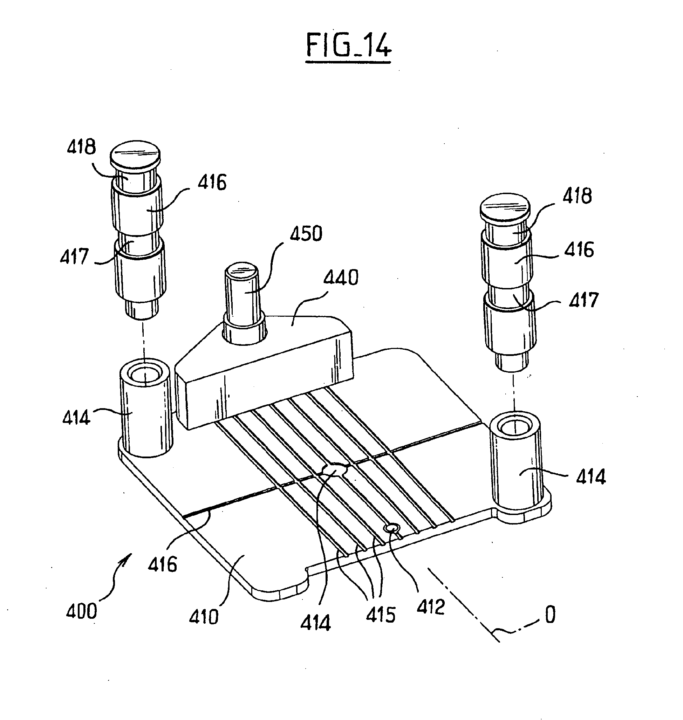

- la figure 14 représente schématiquement des étapes d'assemblage de ladite platine,
- la figure 15 représente un élément ou traverse de la platine conforme à la présente invention,
- la figure 16 représente une autre vue en perspective d'une platine conforme à la présente invention,
- les figures 17 et 18 illustrent schématiquement la possibilité de ranger l'intégralité des moyens composant le châssis démontable conforme à la présente invention, dans une valise, à des fins de transport, et
- la figure 19 représente schématiquement un ensemble complet du système détecteur conforme à la présente invention comprenant un châssis 10 et un micro-ordinateur 20 associé à un détecteur de métaux 30.

On va maintenant décrire la structure du châssis démontable conforme à un mode de réalisation préférentiel, mais non limitatif, de la présente invention.

Le châssis 10 illustré sur les figures annexées, est composé essentiellement par la combinaison d'une embase 100, de mâts verticaux ou colonnes 200, d'un plateau horizontal 300 porté par les colonnes 200 et réglable en hauteur sur celles-ci et d'une platine 400 mobile sur le plateau 300.

De préférence, dans le cadre de la présente invention, la totalité ou tout du moins la majorité des pièces composant les éléments précités: embase 100, colonnes 200, plateau 300 et platine 400, sont réalisés en matériau thermoplastique. Ce matériau est en effet neutre par rapport au champs magnétique et électrique et par conséquent ne perturbe pas le fonctionnement du portique détecteur de métaux lors du déroulement des séquences de tests.

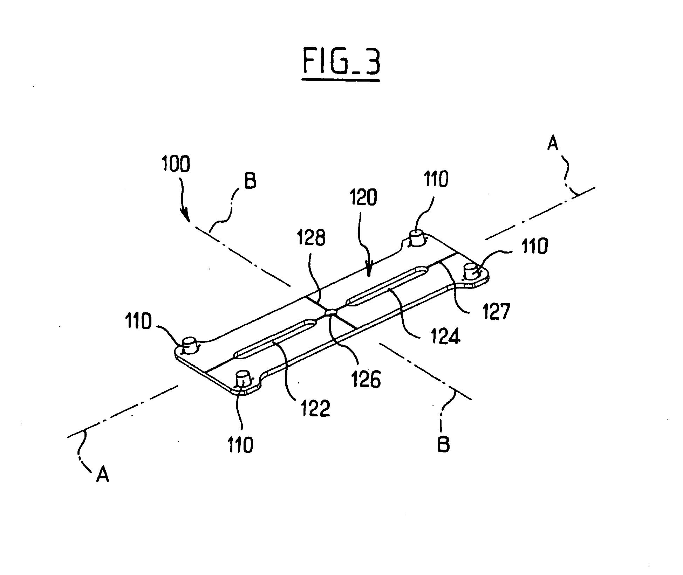

L'embase 100 est destinée à reposer sur le sol. Elle est formée d'une plaque plane rectangulaire. L'embase 100 comprend des moyens 110 de réception de la base ou extrémité inférieure des colonnes 200. De tels moyens peuvent faire l'objet de nombreux modes de réalisation. Selon le mode de réalisation non limitatif représenté sur les figures annexées, ces moyens 110 sont formés de pions en saillie. On distingue ainsi sur la figure 3 quatre pions 110 en saillie sur la surface supérieure de l'embase 100 au voisinage des angles de celle-ci.

L'embase 100 comprend de plus des moyens 120 formant repère d'orientation afin d'assurer une orientation et un positionnement précis du châssis 10 par rapport à une portique détecteur de métaux.

Ces moyens repères 120 peuvent également faire l'objet de nombreux modes de réalisation.

Ils sont typiquement conçus pour faciliter un centrage du châssis par rapport au portique détecteur de métaux.

Selon le mode de réalisation non limitatif représenté sur les figures annexées, l'embase 100 comprend au moins une découpe traversante permettant de positionner l'embase 100 par rapport à des repères prévus au sol au niveau du portique détecteur de métaux. Plus précisément encore, selon le mode de réalisation représenté sur les figures annexées, l'embase 100 comporte ainsi deux découpes rectilignes 122, 124 alignées sur le grand axe A longitudinal et médian de l'embase 100.

L'embase 100 comporte en outre une découpe circulaire centrale 126, entre les deux découpes précitées 122, 124.

L'embase 100 comporte de plus des rainures ou gravures 127, 128 rectilignes formant repères. Il est ainsi prévu selon le mode de réalisation représenté sur les figures annexées deux rainures rectilignes 127, 128 orthogonales entre elles, sur la surface supérieure de l'embase 100. Les deux rainures 127, 128 sont respectivement alignées sur le grand axe longitudinal A et le petit axe transversal B médian de l'embase 100.

A titre d'exemple non limitatif, l'embase 100 possède une longueur de l'ordre de 770mm et une largeur de l'ordre de 300mm.

Les colonnes 200 peuvent également faire l'objet de nombreux modes de réalisation.

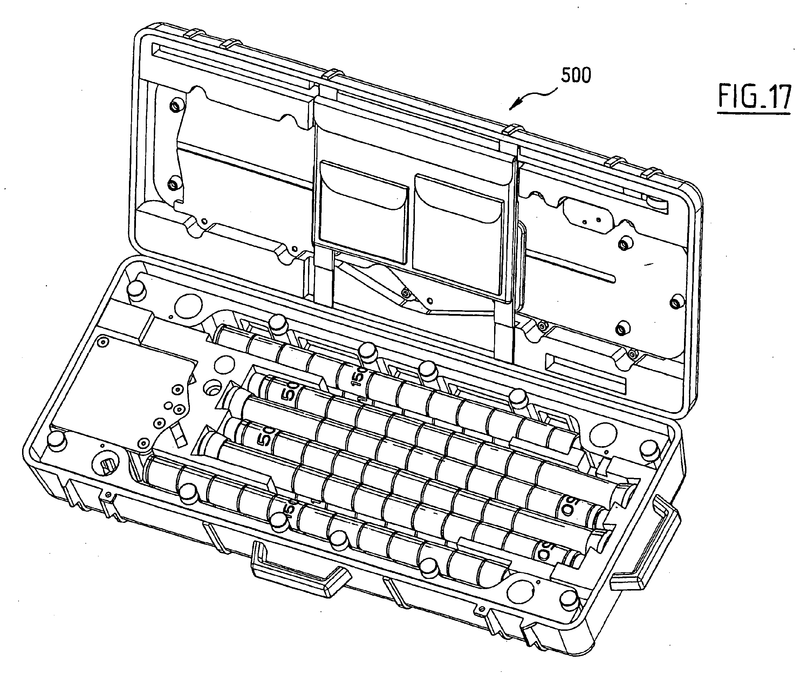

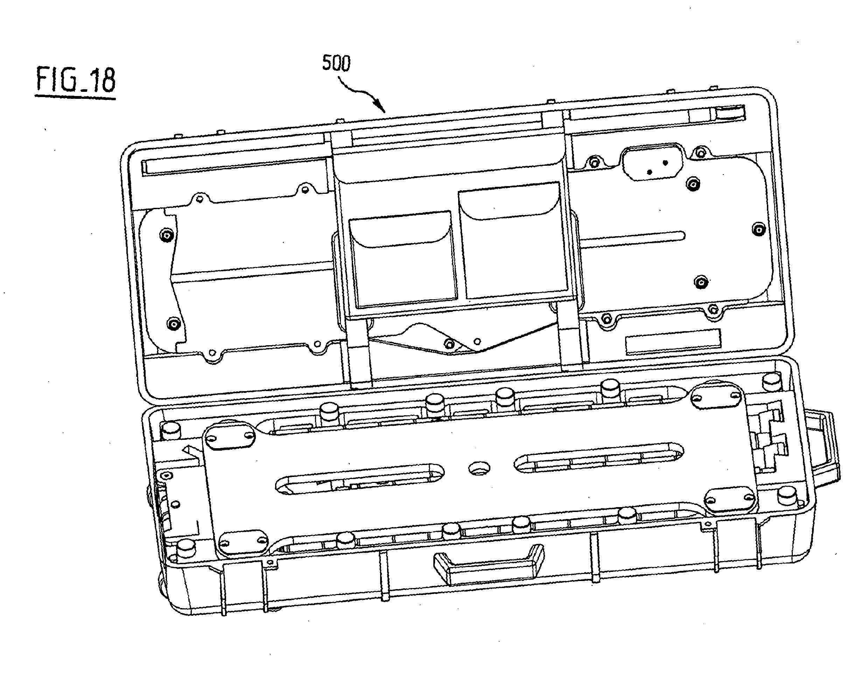

Pour permettre leur rangement aisé dans une valise de dimension raisonnable, comme on le décrira par la suite en regard des figures 17 et 18 annexées, de préférence chaque colonne 200 est formée par l'assemblage de plusieurs tronçons tubulaires. Selon le mode de réalisation représenté sur les figures annexées, chaque colonne 200 est ainsi composée de trois tronçons tubulaires 220, 222, 2224 adaptés pour être assemblés coaxialement. A titre d'exemple non limitatif, chaque colonne 200 est ainsi composée d'un tronçon inférieur 220 d'une hauteur de 55cm, un tronçon intermédiaire 222 d'une hauteur de 60cm et un tronçon supérieur 224 d'une hauteur de 60cm, permettant d'atteindre au total une fois assemblés une hauteur de 175cm.

Les différents tronçons 220, 222, 224 comportent, à leurs extrémités, des moyens de coopération mutuelle permettant l'assemblage parfaitement coaxial entre eux deux à deux, ainsi que sur l'extrémité inférieure du premier tronçon 220, des moyens de coopération avec les moyens complémentaires, par exemple des pions 110, prévus sur la surface supérieure de l'embase 100. Ces moyens de coopération peuvent faire l'objet de nombreux modes de réalisation. Il s'agit de préférence de creux prévus sur une extrémité des tronçons 220, 222, 224 et, sur l'autre extrémité, de pions complémentaires tels que référencés 221 sur les figures annexées pour permettre l'assemblage des tronçons.

Comme on le voit sur les figures annexées, de préférence les différents tronçons 220, 222 et 224 sont gradués sur leur hauteur. Les graduations peuvent faire l'objet de différentes variantes. De préférence, les tronçons tubulaires 220, 222 et 224 possèdent un marquage annulaire tous les 5cm, référencé 223 et par ailleurs des graduations au niveau des hauteurs de 50cm, 100cm et 150cm.

Ces graduations ont pour fonction de permettre un réglage aisé du plateau 300 en hauteur.

Le plateau 300, une fois assemblé, présente avantageusement des dimensions de l'ordre de 1700mm sur 300mm.

Pour permettre néanmoins, là encore, un rangement aisé dans une valise de transport de dimensions raisonnables, de préférence, le plateau 300 est formé par l'assemblage de deux plaques coplanaires 310, 320 et de deux éléments latéraux ou ridelles 330, 340.

Afin de permettre un positionnement relatif précis entre les deux plaques 310, 320, celles-ci possèdent de préférence au niveau de leurs extrémités 312, 322 destinées à être assemblées, une géométrie non rectiligne à complément de formes, référencée 313, 323.

Les deux plaques 310, 320 sont adaptées pour être fixées et maintenues en position relative précise, pour former alors un plateau rigide, par les éléments latéraux ou ridelles 330, 340.

Ces derniers sont constitués de blocs allongés comprenant des moyens, tels que des pions ou cavités complémentaires permettant leur assemblage sur les plaques 310, 320.

Plus précisément encore, selon le mode de réalisation préférentiel représenté sur les figures annexées, il est prévu sur la surface supérieure des plaques 310, 320, au voisinage de leur bord longitudinal, plusieurs vis ou fûts filetés 314, 324 destinés à coopérer avec des écrous ou fourreaux taraudés 334, 344 portés par les éléments latéraux 330, 340.

Selon le mode de réalisation préférentiel conforme à la présente invention, les vis 314, 324, ou fûts filetés sont fixés à demeure sur les plaques 310, 320 pour interdire leur retrait et éviter leur perte. De même, les fourreaux taraudés 334, 344 qui sont complémentaires des vis 314, 324, sont de préférence montés libres de rotation sur les éléments latéraux 330, 340 pour permettre leur assemblage sur les vis 314, 324, tout en étant immobilisés à translation sur les éléments latéraux 330, 340 pour interdire leur retrait et éviter leur perte.

Les plaques 310, 320 sont de préférence munies sur leur seconde extrémité, composant les extrémités libres externes du plateau 300 une fois assemblés, de moyens 316, 326 formant butée destinés à limiter le déplacement de la platine 400.

Sur l'extrémité 326 de la plaque 320, il est ainsi de préférence prévu des moyens 326 formant butée limitant le déplacement direct de la platine 400 sous forme de deux pions 327 en saillie sur la surface supérieure de la plaque 320, alignés selon une direction transversale du plateau 300.

Sur son extrémité opposée, la plaque 310 est de préférence munie, sur sa surface supérieure, de moyens 316 destinés à former butée pour un objet de référence poussé en avant de la platine 400 lors d'une opération de tests. Ces moyens 316 formant butée comprennent ainsi de préférence trois pions 317 alignés selon une rangée transversale par rapport à la direction longitudinale du plateau 300 et deux pions additionnels en saillie 318 situés, sur l'intérieur des pions 317 par rapport au centre longitudinal du plateau 300, mais néanmoins situés à une distance mutuelle supérieure à celle séparant les pions 317 extrêmes précités.

Au voisinage de ces moyens 316 formant butée, la plaque 310 porte de préférence, au niveau du bord longitudinal, un capteur de fin de course 350. Ce capteur 350 peut être sensible au passage de la platine 400 ou encore d'un objet porté par celui-ci ou poussé par celui-ci. Le capteur de fin de course 350 peut faire l'objet de nombreux modes de réalisation. Il s'agit de préférence d'un interrupteur électrique. Cependant en variante, le capteur de fin de course 350 pourrait être composé d'un capteur optique ou basé sur tout autre principe physique.

Le plateau 300 comporte de plus des moyens adaptés pour assurer une immobilisation du plateau 300 à hauteur choisie quelconque sur les colonnes 200. Le choix et le réglage de la hauteur du plateau 300 sont facilités par la présence des marquages 223 sur les colonnes. De préférence, les moyens permettant de fixer le plateau 300 à hauteur voulue sur les colonnes 200 comprennent des canaux 332, 342, traversant formés dans les éléments latéraux 330, 340 et de section complémentaire du diamètre externe des colonnes 200. Les canaux 332, 342 sont associés à des moyens 333, 343 mobiles sur les éléments latéraux 330, 340 entre une position de libération dans laquelle ils n'interfèrent pas avec le volume interne des canaux 332, 342 et une position de travail dans laquelle ils interfèrent avec le volume interne desdits canaux 332, 342 pour venir en appui contre les colonnes 200 et ainsi assurer l'immobilisation du plateau 300 par rapport à ces dernières.

Selon le mode de réalisation particulier donné sur les figures annexées, les moyens 33, 343 précités sont formés d'éléments excentriques montés à pivotement autour d'axes verticaux sur les éléments latéraux 330, 340.

Par ailleurs, de préférence, les éléments latéraux 330, 340 sont munis sur leur surface interne 335, 345, de capteurs adaptés pour détecter le passage de la platine 400 ou d'un objet de référence porté par celle-ci.

Il est ainsi de préférence prévu un capteur au niveau de chaque extrémité d'un élément latéral 330, 340.

Plus précisément encore, de préférence, il est ainsi prévu un capteur optique 346 sur chacune des deux extrémités de l'élément latéral 340. Chaque capteur optique 346 comprend un émetteur optique 3460 et un récepteur optique 3461 adjacents, associés à un réflecteur 336 respectif prévu sur l'une des deux extrémités de l'élément latéral 330 placé en regard. De manière classique en soi, tant qu'aucun objet n'est intercalé sur le trajet séparant le détecteur optique 346 et le réflecteur 336, le récepteur optique 3461 intégré dans le capteur 346 reçoit le flux lumineux généré par l'émetteur adjacent 3460 après réflexion sur le miroir 336. Au contraire, lorsqu'un objet est intercalé sur ce trajet, par exemple la platine 400 ou un objet lié à celle-ci, le trajet optique est interrompu, ce qui est détecté par le récepteur optique 3461 intégré au capteur 346.

Le capteur 346/336 permet de détecter soit l'instant de passage de la platine 400 et l'objet de référence porté par celle-ci, soit la vitesse de déplacement de l'objet 400 par mesure de l'intervalle de temps séparant le passage devant les deux capteurs 346, la distance séparant ceux-ci étant connue avec précision.

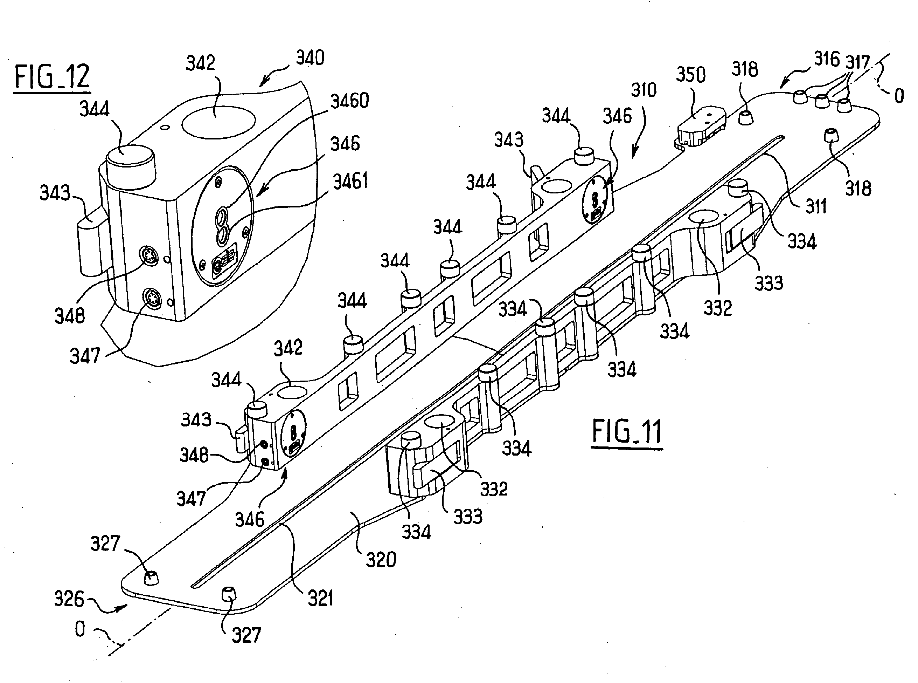

On aperçoit sur la figure 12 annexée, un connecteur 347 accessible sur une extrémité de l'élément latéral 340 pour permettre de relier les capteurs optiques 346 à un micro-ordinateur ou encore à l'unité centrale de calcul et de traitement du portique détecteur de métaux en cours de test. On aperçoit sur la même figure 12, un autre connecteur 348 permettant une liaison sur une entrée auxiliaire d'un moyen de calcul ou de traitement (celui du micro-ordinateur ou du portique en cours de test, par exemple). A titre d'exemple non limitatif, l'un des moyens de liaison 347, 348 peut être utilisé pour assurer une liaison avec une sortie analogique du signal de détection du détecteur de métaux sous test et avec un relais d'alarme du même détecteur. Cette liaison permet par exemple la lecture d'un signal de détection lorsque le passage de la masse examinée sur le dispositif de test est détecté, ainsi que la mémorisation de son amplitude et de l'état de déclenchement éventuel de l'alarme.

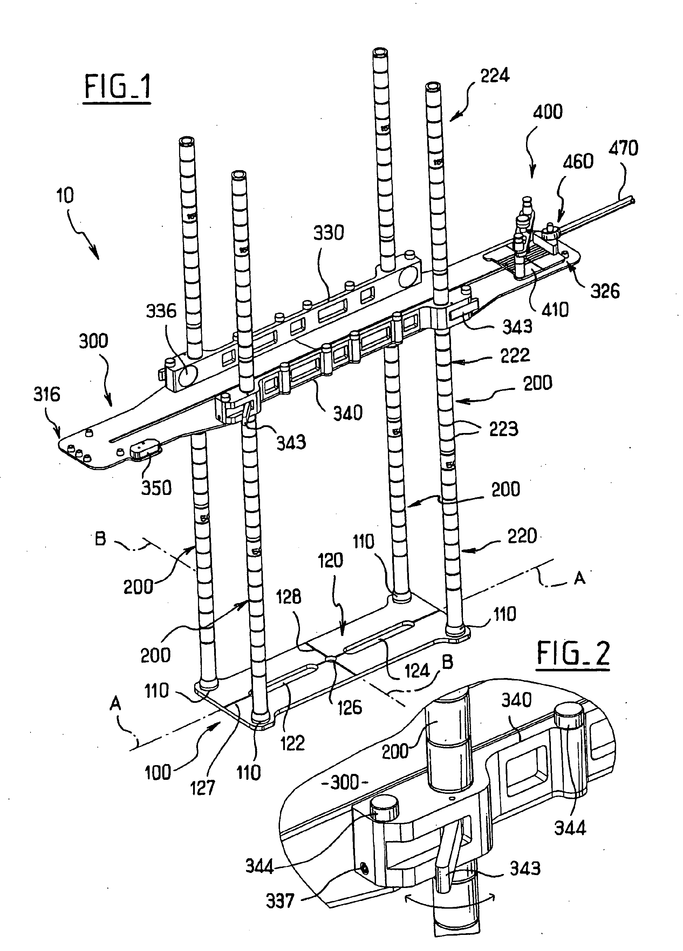

De même, on aperçoit sur la figure 2 annexée, un connecteur 337 permettant de relier le capteur 350 à un micro-ordinateur ou à l'unité centrale de calcul et de traitement du portique détecteur de métaux.

Le plateau 300 comporte en outre les moyens de guidage, de préférence à translation et selon l'axe longitudinal O-O, de la platine 400. De tels moyens de guidage à translation peuvent faire l'objet de nombreux modes de réalisation. De préférence, à cette fin, les deux plaques 310, 320 sont munies d'une gorge 311, 321, sur une partie de leur longueur. Après assemblage, les deux gorges 311, 321 sont alignées et complémentaires. Elles débouchent l'une dans l'autre. Par contre, les deux gorges 311, 321 ne débouchent pas sur les extrémités libres opposées des plaques 310, 320, pour assurer l'intégrité de celles-ci.

On va maintenant décrire la structure de la platine 400 représentée sur les figures annexées.

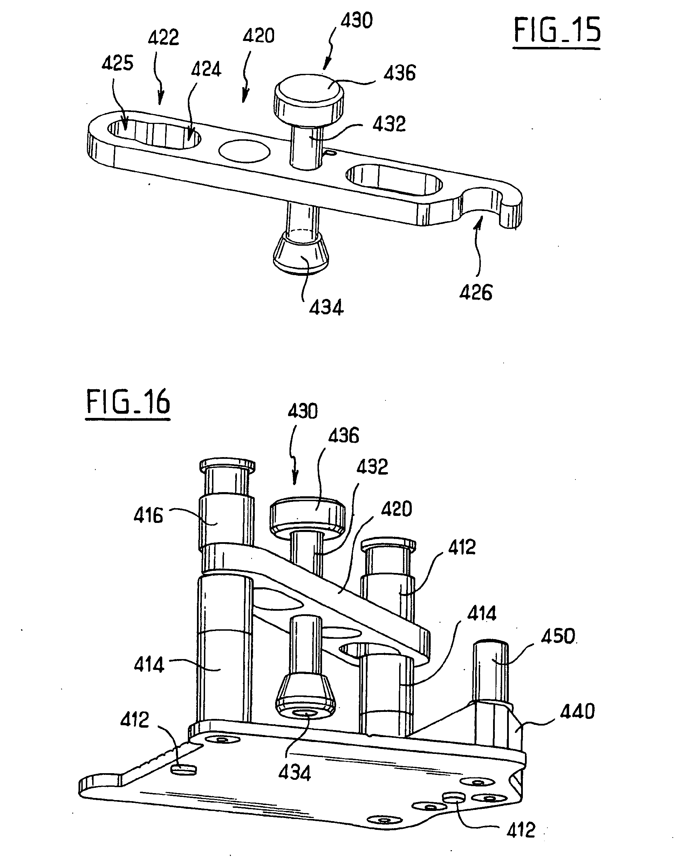

La platine 400 comprend une plaque 410 comprenant des moyens de guidage complémentaires du plateau 300. De préférence, ces moyens de guidage complémentaires sont formés de deux pions en saillie sur la surface inférieure de la plaque 410 et adaptés pour être engagés dans les gorges 311, 321. Les deux pions référencés 412 sont visibles sur la figure 16.

Sur sa surface supérieure, la plaque 410 comporte des moyens formant étau ou serre-joint.

Selon le mode de réalisation particulier représenté sur les figures annexées, à cette fin la surface supérieure de la plaque 410 porte deux pions 414 respectivement adjacents à deux angles opposés en diagonale de la plaque 410. Ces deux pions 414 sont adaptés pour recevoir respectivement deux mâts 416. De préférence, l'assemblage des mâts 416 sur les pions 414 est assuré à l'aide de structures complémentaires type creux/saillie similaires à ceux utilisés pour assembler entre eux les tronçons 220, 222 et 224 des colonnes.

Les deux mâts 416 sont destinés à recevoir une traverse 420 qui porte une vis de serrage 430. La vis 430 possède un corps fileté 432 engagé dans un alésage taraudé complémentaire formé sur la traverse 420. Le corps 402 possède une extrémité évasée 434 dirigée vers la surface supérieure de la plaque 410 et destinée à assurer le serrage d'une pièce ou objet de référence. Le corps 432 possède par ailleurs à sa seconde extrémité une mollette évasée 436 facilitant sa manipulation.

Différents moyens peuvent être prévus pour fixer la traverse 420 sur les mâts 416.

De préférence, à cette fin, chaque mât 416 possède deux gorges annulaires 417, 418, de plus faible diamètre, réparties sur la longueur des mâts 417, 418 pour permettre de recevoir la traverse 420 à des hauteurs respectives différentes pré-réglées. La traverse 320 possède de préférence, au voisinage d'une première extrémité, une lumière longitudinale 422 comprenant deux tronçons communiquant 424, 425. Le premier tronçon 424 possède une largeur supérieure au diamètre externe des mâts 416 pour permettre l'engagement de la traverse 420 sur l'un de ces mâts. Le second tronçon 425 possède quant à lui une largeur complémentaire du diamètre externe des gorges 417, 418.

A sa seconde extrémité, la traverse 420 possède une découpe ou gorge 426 qui débouche latéralement sur la traverse. Il s'agit de préférence d'une gorge à bords légèrement convergents dont le diamètre interne est complémentaire de celui des gorges 417, 418.

Pour engager la traverse 420 sur les mâts 416, l'on présente la traverse 420 à la verticale d'un mât 416 en alignant le tronçon 424 de grand diamètre sur le sommet d'un mât 416. La traverse 420 est alors descendue verticalement sur le mât 416 jusqu'à aligner la traverse avec l'une des gorges choisie 417 ou 418. La traverse 420 est alors déplacée longitudinalement selon sa longueur pour porter le tronçon 425 en regard de la gorge 417, 418 choisie. Puis, la traverse 420 est pivotée autour de l'axe vertical du mât 416 précité pour engager la découpe ou gorge 426, sur une gorge 417, 418 du second mât 416.

L'homme de l'art comprendra qu'il suffit alors de serrer et desserrer la vis 402 pour fixer ou libérer un objet de référence sur la platine 400, ledit objet étant ainsi pincé entre la surface supérieure de la plaque 410 et la base évasée 434 de la vis.

De préférence, la plaque 410 possède sur sa surface supérieure des marquages permettant un positionnement précis de l'objet de référence.

Selon le mode de réalisation particulier non limitatif représenté sur les figures annexées, la plaque 410 possède ainsi un perçage central 414. De préférence, la plaque 410 possède en outre sur sa surface supérieure un réseau de marquage ou rainures. Selon le mode de réalisation préférentiel représenté sur les figures annexées, il est ainsi prévu sur la surface supérieure de la plaque 410 une pluralité de rainures 415 parallèles entre elles et parallèles à la direction longitudinale O-O de la platine 400 et du plateau 300. Il est par ailleurs prévu de préférence une rainure rectiligne médiane 416 transversale aux rainures 415 précitées.

Comme on le voit sur les figures, de préférence la platine 400 reçoit, sur son extrémité longitudinale externe, un bloc 440 formant butée pour l'objet de référence placé sur la surface supérieure de la plaque 410. Le bloc 440 est avantageusement surmonté d'un tourillon 450 adapté pour recevoir une rotule ou un moyen équivalent 460 lié à une tige de manipulation 470.

L'utilisation d'une tige 470 reliée sélectivement au tourillon 450 par l'intermédiaire d'un tourillon 460 permet, à un manipulateur, un déplacement aisé de la platine 400, à translation, selon l'axe longitudinal O-O du plateau 300, par coopération des pions 412 dans la gorge 311, 321 quelle que soit la hauteur du plateau 300 sur les colonnes 200.

Le manipulateur peut ainsi suivre toute instruction fournie, par exemple sur un manuel écrit mis à sa disposition ou de préférence par un micro-ordinateur ou encore l'unité centrale de calcul et traitement du portique détecteur de métaux, afin de respecter la séquence de tests requise.

Comme on l'a indiqué précédemment, et comme le comprendra l'homme de l'art à l'examen des figures annexées, le châssis conforme à la présente invention peut être démonté en pièces individuelles de faible dimension et ainsi rangé dans une valise de transport de dimension raisonnable. Une telle valise 500 est illustrée sur les figures 16 et 17 annexées. L'implantation des éléments dans la valise référencée 500 peut faire l'objet de nombreux modes de réalisation. Elle ne sera donc pas décrite dans le détail par la suite.

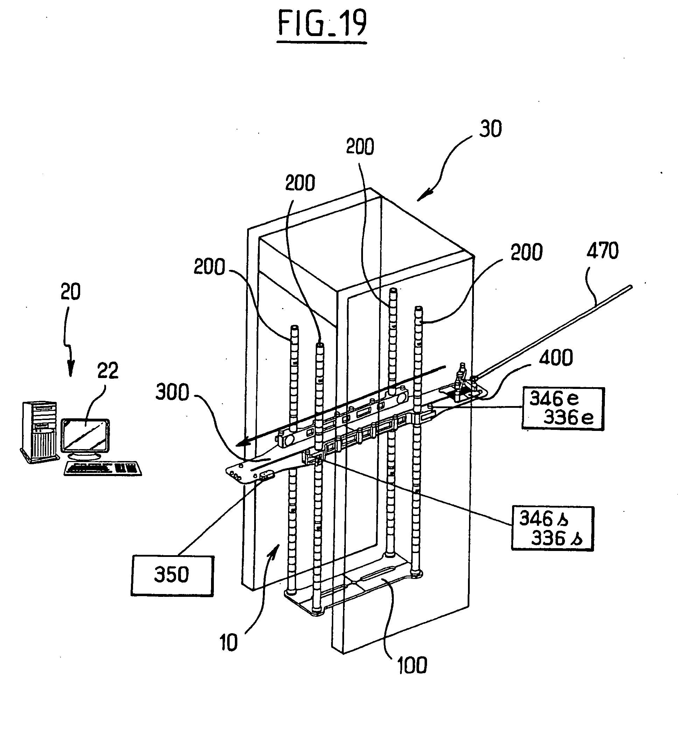

L'homme de l'art comprendra que le dispositif conforme à la présente invention permet 1) un positionnement précis et répétitif d'un objet de référence porté par la platine 400, par rapport aux bobinages émetteurs et récepteurs d'un portique sous test, 2) une orientation précise et répétitive de l'objet de référence, 3) une mesure du temps et/ou de la vitesse, instantané ou moyen, de transit par le portique sous test, 4) une mesure du temps de maintien en fin de course, grâce au capteur 350, avant nouveau transit par le portique, 5) une connexion simple avec toute unité centrale d'enregistrement de données, et 6) une fourniture d'informations complète à l'aide d'un micro-ordinateur ou tout moyen équivalent.
Comme indiqué précédemment, la figure 19 représente schématiquement un ensemble complet du système détecteur conforme à la présente invention comprenant un châssis 10 et un micro-ordinateur 20 associé à un détecteur de métaux 30. Le châssis 10 est placé à l'intérieur du portique détecteur de métaux 30 longitudinalement au milieu de celui-ci. Une pièce de référence est placée sur la platine 400 formant curseur monté à translation sur le plateau 300 et entraîné grâce à la perche 470. La hauteur du plateau 300 peut être ajustée sur les colonnes 200 de sorte que les tests peuvent être opérés à partir du niveau du sol jusqu'à une hauteur au moins de l'ordre de 1700mm. Il suffit à l'opérateur de suivre les indications fournies sur l'écran 22 du micro-ordinateur 20, voir le cas échéant sur l'afficheur du portique détecteur de métaux 30. Le micro-ordinateur 30 est en effet programmé pour fournir successivement l'ensemble des instructions de test. Il procède par ailleurs à la mémorisation des données détectées. Comme indiqué précédemment, les opérations de test sont contrôlées par trois capteurs portés par le plateau 300 : 1) un capteur d'entrée référencé 346e, 336e sur la figure 19 placé à proximité de l'entrée du détecteur de métaux pour détecter lorsque la pièce de référence portée par la platine 400 pénètre dans le portique, 2) un capteur de sortie référencé 346s, 336s sur la figure 19 placé à proximité de la sortie du détecteur de métaux pour détecter lorsque la pièce de référence sort du volume de détection du portique et 3) un capteur de fin de course 350 placé à l'extrémité de la trajectoire de la pièce de référence pour détecter lorsque la pièce de référence débute son trajet de retour à travers le portique de test.

Bien entendu, la présente invention n'est pas limitée au mode de réalisation qui vient d'être décrit, mais s'étend à toute variante conforme aux revendications annexées.

## Revendications

1. Dispositif de test pour portique détecteur de métaux, comprenant un châssis démontable (10) composé de la combinaison d'une embase (100) et d'au moins une colonne (200) associée à des moyens aptes à porter à déplacement un échantillon de référence, **caractérisé par le fait qu'**il comprend une pluralité de colonnes (200), un plateau (300) porté par les colonnes et réglable en hauteur sur celles-ci et une platine (400) mobile sur le plateau (300) et apte à porter l'échantillon de référence, le châssis comportant également des moyens (300) de support et de guidage à déplacement de la platine (400) sur le plateau.

2. Dispositif selon la revendication 1, **caractérisé par le fait qu'**il comprend des moyens (337, 347, 348) de liaison avec une unité de calcul et de traitement.

3. Dispositif selon l'une des revendications 1 ou 2, **caractérisé par le fait qu'**il comprend des moyens (337, 347, 348) de liaison avec un micro-ordinateur.

4. Dispositif selon l'une des revendications 1 ou 2, **caractérisé par le fait qu'**il comprend des moyens (337, 347, 348) de liaison avec une unité centrale de calcul et de traitement intégrée au portique détecteur de métaux.

5. Dispositif selon l'une des revendications 1 à 4, **caractérisé par le fait qu'**il comprend des moyens (337, 347, 348) de liaison avec une unité de calcul et de traitement adaptée pour fournir une séquence d'instructions de manipulation, à un opérateur, et enregistrer et traiter des Informations issues de capteurs (346, 350) portés par le châssis démontable.

6. Dispositif selon l'une des revendications 1 à 5, **caractérisé par le fait qu'**il est réalisé intégralement en matériau thermoplastique.

7. Dispositif selon l'une des revendications 1 à 6, **caractérisé par le fait qu'**il comprend une embase (100) adaptée pour reposer sur le sol et comprenant sur sa surface supérieure des moyens de réception de la base de colonnes (200).

8. Dispositif selon l'une des revendications 1 à 7, **caractérisé par le fait qu'**il comprend une embase (100) munie sur sa surface supérieure de moyens de repère d'orientation et de positionnement (120, 122, 124, 126, 128).

9. Dispositif selon la revendication 8, **caractérisé par le fait que** les moyens de repères de positionnement et d'orientation comprennent au moins une découpe (124, 126).

10. Dispositif selon l'une des revendications 8 ou 9, **caractérisé par le fait que** l'embase (100) comprend un orifice central (126).

11. Dispositif selon l'une des revendications 8 à 10, **caractérisé par le fait que** l'embase (100) comprend au moins une découpe rectiligne longitudinale (122, 124).

12. Dispositif selon l'une des revendications 8 à 11, **caractérisé par le fait que** l'embase (100) comprend sur sa surface supérieure au moins une rainure repère rectiligne (127, 128).

13. Dispositif selon l'une des revendications 8 à 12, **caractérisé par le fait que** l'embase (100) comprend, sur sa surface supérieure, au moins deux rainures (127, 128) orthogonales entre elles.

14. Dispositif selon l'une des revendications 1 à 13, **caractérisé par le fait que** l'embase (100) a des dimensions de l'ordre de 770mm sur 300mm.

15. Dispositif selon l'une des revendications 1 à 14, **caractérisé par le fait qu'**il comprend plusieurs colonnes (200), chaque colonne (200) étant formée par l'assemblage de plusieurs tronçons tubulaires (220, 222, 224).

16. Dispositif selon la revendication 15, **caractérisé par le fait que** chaque colonne (200) a une hauteur de l'ordre de 1750mm.

17. Dispositif selon l'une des revendications 15 ou 16, **caractérisé par le fait que** chaque colonne (200) comprend des graduations (223) à intervalles réguliers.

18. Dispositif selon l'une des revendications 1 à 17, **caractérisé par le fait que** le châssis comprend un plateau (300) possédant des dimensions de l'ordre de 1700m sur 300mm.

19. Dispositif selon l'une des revendications 1 à 18, **caractérisé par le fait qu'**il comprend un plateau (300) formé par l'assemblage de deux plaques coplanaires (310, 320) fixées par des éléments latéraux (330, 340).

20. Dispositif selon la revendication 19, **caractérisé par le fait que** les deux plaques (310, 320) possèdent des structures à compléments de forme (313, 323) au niveau de leurs extrémités adjacentes.

21. Dispositif selon l'une des revendications 19 ou 20, **caractérisé par le fait que** les deux plaques (311, 321) possèdent un système vis/écrou (314, 334, 344) complémentaire avec des éléments latéraux (330, 340).

22. Dispositif selon la revendication 21, **caractérisé par le fait que** les systèmes vis/écrou sont montés de manière imperdable sur des plaques (310, 320) et des éléments latéraux de fixation (330, 340).

23. Dispositif selon l'une des revendications 1 à 22, **caractérisé par le fait qu'**il comprend un plateau (300) muni de butées (316, 326) au voisinage de ses extrémités.

24. Dispositif selon l'une des revendications 1 à 23, **caractérisé par le fait qu'**il comprend un plateau (300) muni d'un capteur de fin de course (350) apte à détecter le passage d'une platine (400).

25. Dispositif selon la revendication 24, **caractérisé par le fait que** le capteur de fin de course (350) est formé d'un interrupteur électrique.

26. Dispositif selon l'une des revendications 1 à 25, **caractérisé par le fait qu'**il comprend un plateau (300) adapté pour être immobilisé à hauteur voulue, grâce à des excentriques (333, 343) sur des colonnes (200).

27. Dispositif selon l'une des revendications 1 à 25, **caractérisé par le fait qu'**il comprend un plateau (300) muni de moyens (311, 321) aptes à guider à translation une platine (400).

28. Dispositif selon la revendication 27, **caractérisé par le fait que** les moyens de guidage sont formés de gorges rectilignes (311, 321).

29. Dispositif selon l'une des revendications 1 à 28, **caractérisé par le fait qu'**il comprend une platine (400) pourvue de moyens (412) complémentaires de moyens de guidage (311, 321) prévus sur un plateau (300).

30. Dispositif selon l'une des revendications 1 à 29, **caractérisé par le fait qu'**il comprend des moyens démontables (416, 420, 430) formant étau fixés sur une platine (400).

31. Dispositif selon la revendication 30, **caractérisé par le fait que** les moyens formant étau comprennent deux mâts amovibles (416) associés à une traverse (420) qui porte une vis (430).

32. Dispositif selon la revendication 31, **caractérisé par le fait que** les mâts (416) comportent au moins deux gorges annulaires (417, 418) adaptées pour accueillir à une hauteur réglable voulue la traverse (420).

33. Dispositif selon l'une des revendications 31 ou 32, **caractérisé par le fait que** la traverse (420) comprend une lumière allongée (422) possédant un tronçon (424) élargie de largeur supérieure au diamètre d'un mât (416) et un tronçon rétréci (425) complémentaire du diamètre d'une gorge (417, 418) formé dans le mât (416), ainsi qu'à sa seconde extrémité une découpe qui débouche latéralement (426) complémentaire d'une gorge (417, 418) formée dans un mât (416).

34. Dispositif selon l'une des revendications 1 à 33, **caractérisé par le fait qu'**il comprend une platine (400) qui comporte un marquage (414, 415, 416) sur sa surface supérieure.

35. Dispositif selon l'une des revendications 1 à 34, **caractérisé par le fait qu'**il comprend une platine (400) qui comporte un perçage central (414).

36. Dispositif selon l'une des revendications 1 à 35, **caractérisé par le fait qu'**il comprend une platine (400) qui comporte un réseau de rainures (415) sur sa surface supérieure.

37. Dispositif selon l'une des revendications 1 à 36, **caractérisé par le fait qu'**il comprend une platine (400) qui comporte plusieurs rainures longitudinales parallèles (415).

38. Dispositif selon l'une des revendications 1 à 37, **caractérisé par le fait qu'**il comprend une platine (400) qui comporte une rainure transversale (416).

39. Dispositif selon l'une des revendications 1 à 38, **caractérisé par le fait qu'**il comprend une platine (400) qui porte une butée (440).

40. Dispositif selon l'une des revendications 1 à 39, **caractérisé par le fait qu'**il comprend en outre une tige (470) associée à une rotule (460) adaptée pour assurer la manipulation à déplacement d'une platine (400).

41. Dispositif selon l'une des revendications précédentes, **caractérisé par le fait qu'**il comprend en outre une valise de rangement (500) adaptée pour contenir l'ensemble des éléments démontés du châssis.

## Claims

1. A test device for a metal detector portal structure, comprising a collapsible rack (10) consisting of the combination of a base (100) and at least one column (200) associated with means suitable for carrying and displacing a reference sample, **characterised in that** it comprises a plurality of columns (200), a tray (300) supported by the columns and adjustable in height on the columns and a panel (400) free to move on the tray (300) and capable of carrying the reference sample, the rack also comprising support and guide means (300) for displacement of the panel (400) on the tray.

2. The device as claimed in Claim 1, **characterised in that** it comprises means (337, 347, 348) for connection with a calculation and processing unit.

3. The device as claimed in either Claim 1 or 2, **characterised in that** it comprises means (337, 347, 348) for connection with a microcomputer.

4. The device as claimed in either Claim 1 or 2, **characterised in that** it comprises means (337, 347, 348) for connection with a calculation and processing unit integrated into the metal detector portal structure.

5. The device as claimed in any one of Claims 1 to 4, **characterised in that** it comprises means (337, 347, 348) for connection with a calculation and processing unit suitable for providing a sequence of manipulation instructions for an operator, and to record and process information output from sensors (346, 350) supported on the collapsible rack.

6. The device as claimed in any one of Claims 1 to 5, **characterised in that** it is made entirely from a thermoplastic material.

7. The device as claimed in any one of Claims 1 to 6, **characterised in that** it comprises a base (100) that will be placed on the floor comprising means for receiving the bottom part of the columns (200) on its upper surface.

8. The device as claimed in any one of Claims 1 to 7, **characterised in that** it comprises a base (100) fitted with orientation and positioning marker means (120, 122, 124, 126, 128) on its upper surface.

9. The device as claimed in Claim 8, **characterised in that** positioning and orientation marker means comprise at least one cut-out (124, 126).

10. The device as claimed in either Claim 8 or 9, **characterised in that** the base (100) comprises a central orifice (126).

11. The device as claimed in any one of Claims 8 to 10, **characterised in that** the base (100) comprises at least one longitudinal straight cut-out (122, 124).

12. The device as claimed in any one of Claims 8 to 11, **characterised in that** the base (100) comprises at least one straight marker groove (127, 128) on its upper face.

13. The device as claimed in any one of Claims 8 to 12, **characterised in that** the base (100) comprises at least two grooves (127, 128) orthogonal to each other, on its upper surface.

14. The device as claimed in any one of Claims 1 to 13, **characterised in that** the base (100) is about 770 mm long and about 300 mm wide.

15. The device as claimed in any one of Claims 1 to 14, **characterised in that** it comprises several columns (200), each column (200) being formed by assembly of several tubular segments (220, 222, 224).

16. The device as claimed in Claim 15, **characterised in that** each column (200) is about 1750 mm high.

17. The device as claimed in either Claim 15 or 16, **characterised in that** each column (200) comprises graduations (223) with regular intervals.

18. The device as claimed in any one of Claims 1 to 17, **characterised in that** the rack comprises a tray (300) about 1700 m long and 300 mm wide.

19. The device as claimed in any one of Claims 1 to 18, **characterised in that** it comprises a tray (300) formed by the assembly of two coplanar plates (310, 320) fixed by side elements (330, 340).

20. The device as claimed in Claim 19, **characterised in that** the shapes (313, 323) of adjacent ends of the two plates (310, 320) are complementary.

21. The device as claimed in either Claim 19 or 20, **characterised in that** the two plates (311, 321) are provided with an additional screw/nut system (314, 334, 344) with side elements (330, 340).

22. The device as claimed in Claim 21, **characterised in that** the screw/nut systems are assembled onto the plates (310, 320) and side attachment elements (330, 340) such that they cannot be lost from them.

23. The device as claimed in any one of Claims 1 to 22, **characterised by** that fact that it comprises a tray (300) fitted with stops (316, 326) close to its ends.

24. The device as claimed in any one of Claims 1 to 23, **characterised in that** it comprises a tray (300) fitted with a limit stop sensor (350) sensitive to passage of a panel (400).

25. The device as claimed in Claim 24, **characterised in that** the limit stop sensor (350) is an electrical switch.

26. The device as claimed in any one of Claims 1 to 25, **characterised in that** it comprises a tray (300) that will be fixed at the required height, using cams (333, 343) on the columns (200).

27. The device as claimed in any one of Claims 1 to 25, **characterised in that** it comprises a tray (300) provided with means (311, 321) for guiding a panel (400) in translation.

28. The device as claimed in Claim 27, **characterised in that** the guide means consist of straight grooves (311, 321).

29. The device as claimed in any one of Claims 1 to 28, **characterised in that** it comprises a panel (400) provided with means (412) complementary to the guide means (311, 321) provided on a tray (300).

30. The device as claimed in any one of Claims 1 to 29, **characterised in that** it comprises removable means (416, 420, 430) forming a vice fixed on a panel (400).

31. The device as claimed in Claim 30, **characterised in that** the means forming a vice comprise two removable poles (416) associated with a cross-piece (420) that carries a clamping screw (430).

32. The device as claimed in Claim 31, **characterised in that** the poles (416) comprise at least two annular grooves (417, 418) that will hold the cross-piece (420) at an adjustable height.

33. The device as claimed in either Claim 31 or 32, **characterised in that** the cross-piece (420) comprises an elongated slot (422) with a widened segment (424) wider than the diameter of a pole (416) and a complementary narrowed segment (425) with the same diameter as a groove (417, 418) formed in the pole (416), and a side opening cut-out (426) complementary to a groove (417, 418) formed in a pole (416).

34. The device as claimed in any one of Claims 1 to 33, **characterised in that** it comprises a panel (400) comprising a marking (414, 415, 416) on its upper surface.

35. The device as claimed in any one of Claims 1 to 34, **characterised in that** it comprises a panel (400) provided with a central drilling (414).

36. The device as claimed in any one of Claims 1 to 35, **characterised in that** it comprises a panel (400) comprising a network of grooves (415) on its upper surface.

37. The device as claimed in any one of Claims 1 to 36, **characterised in that** it comprises a panel (400) comprising several parallel longitudinal grooves (415).

38. The device as claimed in any one of Claims 1 to 37, **characterised in that** it comprises a panel (400) provided with a transverse groove (416).

39. The device as claimed in any one of Claims 1 to 38, **characterised in that** it comprises a panel (400) holding a stop (440).

40. The device as claimed in any one of Claims 1 to 39, **characterised in that** it also comprises a rod (470) associated with a ball joint (460) adapted to handle the displacement of a panel (400).

41. The device as claimed in any one of the above claims, **characterised in that** it also comprises a storage case (500) suitable for containing all disassembled elements from the rack.

## Patentansprüche

1. Testvorrichtung für einen Durchgangsmetalldetektor, umfassend ein auseinandernehmbares Gestell (10), das aus der Kombination eines Sockels (100) und wenigstens einer Säule (200) zusammengebaut ist, die mit Mitteln verbunden ist, die geeignet sind, eine Referenzprobe verschiebbar zu tragen, **dadurch gekennzeichnet, dass** sie eine Vielzahl von Säulen (200) umfasst, eine Auflage (300), die von den Säulen getragen wird und auf diesen höhenverstellbar ist, sowie eine Grundplatte (400), die auf der Auflage (300) beweglich ist und geeignet ist, eine Referenzprobe zu tragen, wobei das Gestell auch Stütz- und Führungsmittel (300) zur Verschiebung der Grundplatte (400) auf der Auflage umfasst.

2. Vorrichtung gemäß Anspruch 1, **dadurch gekennzeichnet, dass** sie Mittel (337, 347, 348) zur Verbindung mit einer Rechen- und Verarbeitungseinheit umfasst.

3. Vorrichtung gemäß einem der Ansprüche 1 oder 2, **dadurch gekennzeichnet, dass** sie Mittel (337, 347, 348) zur Verbindung mit einem Mikrocomputer umfasst.

4. Vorrichtung gemäß einem der Ansprüche 1 oder 2, **dadurch gekennzeichnet, dass** sie Mittel (337, 347, 348) zur Verbindung mit einer zentralen Rechen- und Verarbeitungseinheit umfasst, die in den Durchgangsmetalldetektor eingebaut ist.

5. Vorrichtung gemäß einem der Ansprüche 1 bis 4, **dadurch gekennzeichnet, dass** sie Mittel (337, 347, 348) zur Verbindung mit einer Rechen- und Verarbeitungseinheit umfasst, die ausgelegt ist, eine Folge von Bedienungsanweisungen an einen Operator bereitzustellen, und Informationen von Sensoren (346, 350), die vom auseinandernehmbaren Gestell getragen werden, zu speichern und zu verarbeiten.

6. Vorrichtung gemäß einem der Ansprüche 1 bis 5, **dadurch gekennzeichnet, dass** sie einstückig aus thermoplastischem Material hergestellt ist.

7. Vorrichtung gemäß einem der Ansprüche 1 bis 6, **dadurch gekennzeichnet, dass** sie einen Sockel (100) umfasst, der ausgelegt ist, um auf dem Boden zu ruhen und wobei er auf seiner oberen Fläche Mittel zur Aufnahme der Basis der Säulen (200) umfasst.

8. Vorrichtung gemäß einem der Ansprüche 1 bis 7, **dadurch gekennzeichnet, dass** sie einen Sockel (100) umfasst, der auf seiner oberen Fläche mit Ausrichtungs- und Positionierungskennzeichenmittel (120, 122, 124, 126, 128) ausgestattet ist.

9. Vorrichtung gemäß Anspruch 8, **dadurch gekennzeichnet, dass** die Ausrichtungs- und Positionierungskennzeichenmittel wenigstens einen Ausschnitt (124, 126) umfassen.

10. Vorrichtung gemäß einem der Ansprüche 8 oder 9, **dadurch gekennzeichnet, dass** der Sockel (100) ein zentrale Öffnung (126) umfasst.

11. Vorrichtung gemäß einem der Ansprüche 8 bis 10, **dadurch gekennzeichnet, dass** der Sockel (100) wenigstens einen geradlinigen, länglichen Ausschnitt (122, 124) umfasst.

12. Vorrichtung gemäß einem der Ansprüche 8 bis 11, **dadurch gekennzeichnet, dass** der Sockel (100) auf seiner oberen Fläche wenigstens eine geradlinige Kennzeichnungsrille (127, 128) umfasst.

13. Vorrichtung gemäß einem der Ansprüche 8 bis 12, **dadurch gekennzeichnet, dass** der Sockel (100) auf seiner oberen Fläche wenigstens zwei zueinander senkrechte Rillen (127, 128) umfasst.

14. Vorrichtung gemäß einem der Ansprüche 1 bis 13, **dadurch gekennzeichnet, dass** der Sockel (100) Ausmaße in der Größenordnung von 770mm auf 330mm hat.

15. Vorrichtung gemäß einem der Ansprüche 1 bis 14, **dadurch gekennzeichnet, dass** sie mehrere Säulen (200) umfasst, wobei jede Säule (200) durch das Zusammenbauen mehrerer rohrförmiger Abschnitte (220, 222, 224) gebildet wird.

16. Vorrichtung gemäß Anspruch 15, **dadurch gekennzeichnet, dass** jede Säule (200) eine Höhe in der Größenordnung von 1750mm hat.

17. Vorrichtung gemäß einem der Ansprüche 15 oder 16, **dadurch gekennzeichnet, dass** jede Säule (200) Einteilungen (223) in regelmäßigen Abständen umfasst.

18. Vorrichtung gemäß einem der Ansprüche 1 bis 17, **dadurch gekennzeichnet, dass** das Gestell eine Auflage (300) umfasst, die Abmessungen in der Größenordnung von 1700m auf 300mm besitzt.

19. Vorrichtung gemäß einem der Ansprüche 1 bis 18, **dadurch gekennzeichnet, dass** sie eine Auflage (300) umfasst, die gebildet ist durch das Zusammenbauen zweier koplanarer Platten (310, 320), die durch Seitenelemente (330, 340) befestigt sind.

20. Vorrichtung gemäß Anspruch 19, **dadurch gekennzeichnet, dass** die beiden Platten (310, 320) formkomplementäre Strukturen (313, 323) auf Höhe ihrer benachbarten Enden besitzen.

21. Vorrichtung gemäß einem der Ansprüche 19 oder 20, **dadurch gekennzeichnet, dass** die beiden Platten (311, 321) ein Schraube/Muttersystem (314, 334, 344) umfassen, das komplementär zu Seitenelementen (330, 340) ist.

22. Vorrichtung gemäß Anspruch 21, **dadurch gekennzeichnet, dass** die Schraube/Muttersysteme unverlierbar auf Platten (310, 320) und seitlichen Befestigungselemente (330, 340) montiert sind.

23. Vorrichtung gemäß einem der Ansprüche 1 bis 22, **dadurch gekennzeichnet, dass** sie eine Auflage (300) umfasst, die mit Anschlägen (316, 326) in der Umgebung ihrer Enden ausgestattet ist.

24. Vorrichtung gemäß einem der Ansprüche 1 bis 23, **dadurch gekennzeichnet, dass** sie eine Auflage (300) umfasst, die mit einem Endlagensensor (350) ausgestattet ist, der geeignet ist, den Durchgang einer Grundplatte (400) zu detektieren.

25. Vorrichtung gemäß Anspruch 24, **dadurch gekennzeichnet, dass** der Endlagensensor (350) von einem elektrischen Schalter gebildet wird.

26. Vorrichtung gemäß einem der Ansprüche 1 bis 25, **dadurch gekennzeichnet, dass** sie eine Auflage (300) umfasst, die geeignet ist, um auf gewünschter Höhe dank Exzenter (333, 343) auf Säulen (200) unbeweglich gemacht zu werden.

27. Vorrichtung gemäß einem der Ansprüche 1 bis 25, **dadurch gekennzeichnet, dass** sie eine Auflage (300) umfasst, die mit Mitteln (311, 321) ausgestattet ist, die geeignet sind, um eine Grundplatte (400) in Verschiebungsrichtung zu führen.

28. Vorrichtung gemäß Anspruch 27, **dadurch gekennzeichnet, dass** die Führungsmittel aus geradlinigen Vertiefungen (311, 321) gebildet sind.

29. Vorrichtung gemäß einem der Ansprüche 1 bis 28, **dadurch gekennzeichnet, dass** sie eine Grundplatte (400) umfasst, die mit Mitteln (412) ausgestattet ist, die komplementär zu auf einer Auflage (300) vorgesehenen Führungsmitteln (311, 321) sind.

30. Vorrichtung gemäß einem der Ansprüche 1 bis 29, **dadurch gekennzeichnet, dass** sie auseinandernehmbare, einen Schraubstock bildende Mittel (416, 420, 430) umfasst, die auf einer Grundplatte (400) befestigt sind.

31. Vorrichtung gemäß Anspruch 30, **dadurch gekennzeichnet, dass** die einen Schraubstock bildenden Mittel zwei unbewegliche Masten (416) umfassen, die mit einer Querstrebe (420) verbunden sind, die eine Schraube (430) trägt.

32. Vorrichtung gemäß Anspruch 31, **dadurch gekennzeichnet, dass** die Masten (416) wenigstens zwei ringförmige Vertiefungen (417, 418) umfassen, die ausgelegt sind, um auf einer einstellbaren gewünschten Höhe die Querstrebe (420) aufzunehmen.

33. Vorrichtung gemäß einem der Ansprüche 31 oder 32, **dadurch gekennzeichnet, dass** die Querstrebe (420) eine längliche Öffnung (422) umfasst, die einen verbreiterten Abschnitt (424) umfasst mit einer Breite, die größer ist als der Durchmesser eines Masts (416), und einen verengten Abschnitt (425), der komplementär zum Durchmesser einer Vertiefung (417, 418) ist, die in dem Mast (416) gebildet ist, sowie an ihrem zweiten Ende einen Ausschnitt, der seitlich (426) komplementär zu einer in einem Mast (416) gebildeten Vertiefung (417, 418) einmündet.

34. Vorrichtung gemäß einem der Ansprüche 1 bis 33, **dadurch gekennzeichnet, dass** sie eine Grundplatte (400) umfasst, die eine Markierung (414, 415, 416) auf ihrer oberen Fläche umfasst.

35. Vorrichtung gemäß einem der Ansprüche 1 bis 34, **dadurch gekennzeichnet, dass** sie eine Grundplatte (400) umfasst, die eine zentrale Bohrung (414) umfasst.

36. Vorrichtung gemäß einem der Ansprüche 1 bis 35, **dadurch gekennzeichnet, dass** sie eine Grundplatte (400) umfasst, die ein Netz von Rillen (415) auf ihrer oberen Fläche umfasst.

37. Vorrichtung gemäß einem der Ansprüche 1 bis 36, **dadurch gekennzeichnet, dass** sie eine Grundplatte (400) umfasst, die mehrere parallele Längsrillen (415) umfasst.

38. Vorrichtung gemäß einem der Ansprüche 1 bis 37, **dadurch gekennzeichnet, dass** sie eine Grundplatte (400) umfasst, die eine Querrille (416) umfasst.

39. Vorrichtung gemäß einem der Ansprüche 1 bis 38, **dadurch gekennzeichnet, dass** sie eine Grundplatte (400) umfasst, die einen Anschlag (440) umfasst.

40. Vorrichtung gemäß einem der Ansprüche 1 bis 39, **dadurch gekennzeichnet, dass** sie ferner eine mit einem Kugelgelenk (460) verbundene Stange (470) umfasst, die ausgelegt ist, die Handhabung der Verschiebung einer Grundplatte (400) sicherzustellen.

41. Vorrichtung gemäß einem der vorhergehenden Ansprüche, **dadurch gekennzeichnet, dass** sie ferner einen Ordnungskoffer (500) umfasst, der ausgelegt ist, die Gesamtheit der auseinandergenommenen Elemente des Gestells zu enthalten.
